(19)

**Europäisches Patentamt**
**European Patent Office**
**Office européen des brevets**

(11) **EP 4 170 283 A1**

(12) **EUROPEAN PATENT APPLICATION**

(43) Date of publication:
**26.04.2023 Bulletin 2023/17**

(21) Application number: **22203005.8**

(22) Date of filing: **21.10.2022**

(51) International Patent Classification (IPC):
**G01C 21/00** (2006.01)          **G06F 16/29** (2019.01)

(52) Cooperative Patent Classification (CPC):
**G01C 21/3859; G06F 16/29**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2021 US 202117509689**

(71) Applicant: **TeleNav, Inc.**
**Santa Clara, CA 95054 (US)**

(72) Inventor: **Wang, Liang**
**Santa Clara, CA, 95054 (US)**

(74) Representative: **Kretschmann, Dennis**
**Boehmert & Boehmert**
**Anwaltspartnerschaft mbB**
**Pettenkoferstrasse 22**
**80336 München (DE)**

(54) **NAVIGATION SYSTEM WITH MAP DATA UPDATE MECHANISM AND METHOD OF OPERATION THEREOF**

(57)    A navigation system (100) includes: a communication circuit (516) configured to: transmit a map update request (301), and receive an index delta (120) in response to the map update request (301); a control circuit (512), coupled to the communication circuit (516), configured to: access the index delta (120) includes a map update (549) allocated for the map update request (301); integrate the index delta (120) into a map database (124) copied into the map update (549); perform an integration check (401) on the map update (549); parse the map update (549) includes generating a map data update (121); and enable an on-board map database (116) including the map data update (121) for display on and control of a device (102).

FIG. 3

**Description**

TECHNICAL FIELD

An embodiment of the present invention relates generally to a navigation system, and more particularly to a system with a map data update mechanism.

BACKGROUND ART

As drivers become more reliant of in-vehicle navigation tools, the ability to keep the map data and indexing up to date becomes more of a challenge. Many vehicles travel in excess of 20,000 miles per year. A good percentage of those miles can be on Interstate highways travelling between states for business or pleasure. Many large cities have road construction activities that alter the available routes to get through or around the city traffic. In order to address these changes, an update to the index and map data is required. In many cases the need for an update will not be recognized until the route is planned or actually being driven. Some larger updates can take many hours to be performed in-vehicle, primarily due to the processing power and lack of storage available in the vehicle.

As the number of vehicles on the road increases, the bandwidth required to deliver updates to the index and map data also increases. In some vehicles, updates to the map data were provided in a memory chip that was plugged into dashboard. This technique did not provide the latest updates, since the memory chip may have been written several months prior to delivery to the end user. Other services have attempted subscription services to deliver more up-to-date information, but incorporation into the navigation mechanism could take many hours, during which the navigation system could not be used.

Thus, a need still remains for a navigation system with map data update mechanism. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

DISCLOSURE OF THE INVENTION

An embodiment of the present invention provides a method of operation of a navigation system including: transmitting a map update request; receiving an index delta in response to the map update request; accessing the index delta includes a map update allocated for the map update request; integrating the index delta into a map database copied into the map update; performing an integration check on the map update; parsing the map update includes generating a map data update; and enabling an on-board map database including the map data update for displaying on and controlling a device.

An embodiment of the present invention provides a navigation system, including a communication circuit configured to: transmit a map update request, and receive an index delta in response to the map update request; a control circuit, coupled to the communication circuit, configured to: access the index delta includes a map update allocated for the map update request; integrate the index delta into a map database copied into the map update; perform an integration check on the map update; parse the map update includes generating a map data update; and enable an on-board map database including the map data update for display on and control of a device.

An embodiment of the present invention provides a non-transitory computer readable medium including instructions for a navigation system, including: transmitting a map update request; receiving an index delta in response to the map update request; accessing the index delta includes a map update allocated for the map update request; integrating the index delta into a map database copied into the map update; performing an integration check on the map update; parsing the map update includes generating a map data update; and enabling an on-board map database including the map data update for displaying on and controlling a device.

Certain embodiments of the invention have other steps or elements in addition to or in place of those mentioned above. The steps or elements will become apparent to those skilled in the art from a reading of the following detailed description when taken with reference to the accompanying drawings.

BRIEF DESCRIPTION OF THE DRAWINGS

FIG. 1 is a block diagram of a navigation system with map data update mechanism in an embodiment of the present invention.

FIG. 2 is an example of a top view of a first device configured to provide the map data update mechanism in an embodiment of the navigation system.

FIG. 3 is an exemplary flow chart of a map update of the navigation system.

FIG. 4 is an exemplary flow chart of the map data update integration checks of the navigation system.

FIG. 5 is an exemplary block diagram of the navigation system in an embodiment.

FIG. 6 is exemplary operational flow chart of the navigation system.

FIG. 7 is a flow chart of a method of operation of a navigation system in an embodiment of the present invention.

BEST MODE FOR CARRYING OUT THE INVENTION

The following embodiments provide a mechanism for updating an index of map data required for travel in new areas. When the route is unfamiliar and it has been some time since travel in this portion of the state or country has occurred, an update of the index and map data may be required in order to plan travel routes and find points of interest, such as gas stations, restaurants, rest areas, hotels, and the like.

Since road construction is a daily fact of life in many major cities, maintaining an up-to-date view of the highway system can be very challenging. The vehicle movement control can further be based on accurately identifying highway conditions on a real-time basis in order to assure the driver assisted or autonomous vehicle can be completed without risk of damage to the vehicle or any adjacent objects or property.

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. The embodiments of various components as a matter of descriptive convenience and are not intended to have any other significance or provide limitations for an embodiment of the present invention.

One skilled in the art would appreciate that the format with which navigation information is expressed is not critical to some embodiments of the invention. For example, in some embodiments, navigation information is presented in the format of (X, Y, Z); where X and Y and Z are three coordinates that define the geographic location, i.e., a position of a vehicle.

The term "module" referred to herein can include or be implemented as or include software running on specialized hardware, hardware, or a combination thereof in the present invention in accordance with the context in which the term is used. For example, the software can be machine code, firmware, embedded code, and application software. The software can also include a function, a call to a function, a code block, or a combination thereof.

Also, for example, the hardware can be gates, circuitry, processor, computer, integrated circuit, integrated circuit cores, memory devices, a pressure sensor, an inertial sensor, a microelectromechanical system (MEMS), passive devices, physical non-transitory memory medium including instructions for performing the software function, a portion therein, or a combination thereof to control one or more of the hardware units or circuits. Further, if a "unit" is written in the system claims section below, the "unit" is deemed to include hardware circuitry for the purposes and the scope of the system claims.

The units in the following description of the embodiments can be coupled or attached to one another as described or as shown. The coupling or attachment can be direct or indirect without or with intervening items between coupled or attached modules or units. The coupling or attachment can be by physical contact or by communication between modules or units, such as wireless communication.

It is also understood that the nouns or elements in the embodiments can be described as a singular instance. It is understood that the usage of singular is not limited to singular but the singular usage can be applicable to multiple instances for any particular noun or element in the application. The numerous instances can be the same or similar or can be different.

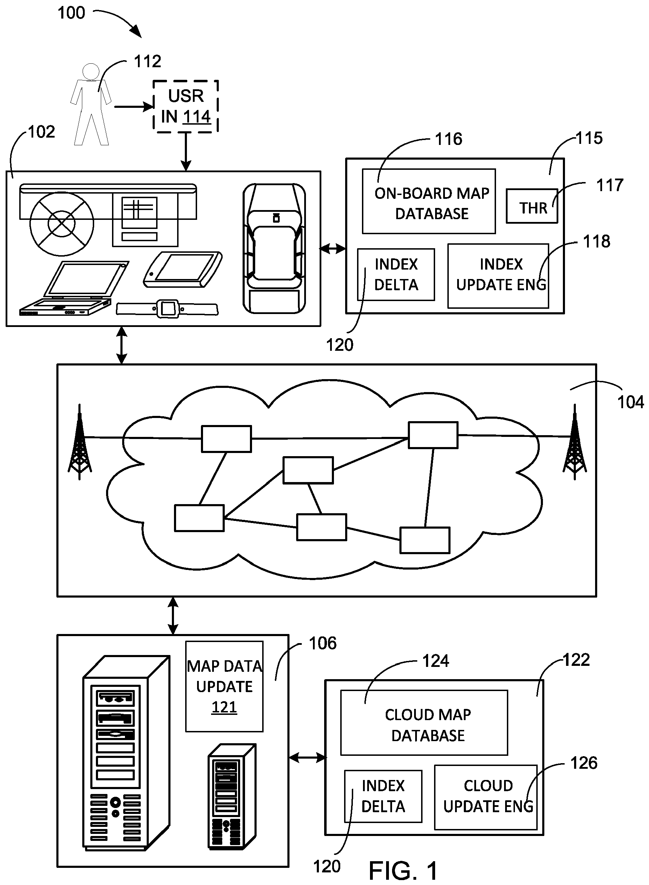

Referring now to FIG. 1, therein is shown a block diagram of a navigation system 100 with map data update mechanism in an embodiment of the present invention. The navigation system 100 can include a first device 102, such as a client or a server, connected to a second device 106, such as a client or server.

For example, the first device 102 can be of any of a variety of computing devices, such as a cellular phone, personal digital assistant, a notebook computer, a wearable device, internet of things (IoT) device, automotive telematics navigation system, or another multi-functional device. Also, for example, the first device 102 can include a device or a sub-system, an autonomous or self-maneuvering vehicle or object, a driver assisted vehicle, a remotecontrolled vehicle or object, or a combination thereof.

The first device 102 can couple, either directly or indirectly, to the network 104 to communicate with the second device 106 or can be a stand-alone device. The first device 102 can further be separate form or incorporated with a vehicle, such as a car, truck, bus, or motorcycle. For illustrative purposes, the navigation system 100 is described with the first device 102 as a mobile computing device, although it is understood that the first device 102 can be different types of devices.

The second device 106 can be any of a variety of centralized or decentralized computing devices. For example, the second device 106 can be a computer, grid computing resources, a virtualized computer resource, cloud computing resource, routers, switches, peer-to-peer distributed computing devices, or a combination thereof.

The second device 106 can be a cloud server that is centralized in a single room, distributed across different rooms, distributed across different geographical locations, embedded within a telecommunications network. The second device 106 can couple with the network 104 to communicate with the first device 102. The second device 106 can also be a client type device as described for the first device 102.

For illustrative purposes, the navigation system 100 is described with the second device 106 as a non-mobile computing device, although it is understood that the second device 106 can be different types of computing devices. For example, the second device 106 can also be a mobile computing device, such as notebook computer, another client device, a wearable device, or a different type of client device.

Also, for illustrative purposes, the navigation system 100 is described with the second device 106 as a computing device, although it is understood that the second device 106 can be different types of devices. Also, for illustrative purposes, the navigation system 100 is shown with the second device 106 and the first device 102 as endpoints of the network 104, although it is understood that the navigation system 100 can include a different partition between the first device 102, the second device 106, and the network 104. For example, the first device 102, the second device 106, or a combination thereof can also function as part of the network 104.

The network 104 can span and represent a variety of networks. For example, the network 104 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path. Ethernet, digital subscriber line (DSL), fiber to the home (FTTH), and plain old telephone service (POTS) are examples of wired communication that can be included in the network 104. Further, the network 104 can traverse a number of network topologies and distances. For example, the network 104 can include direct connection, personal area network (PAN), local area network (LAN), metropolitan area network (MAN), wide area network (WAN), or a combination thereof.

The navigation system 100 can provide additional features that are not available in prior art navigation systems. The first device 102 can be coupled to an on-board map data manager 115, such as a pixel evaluation module, that can be implemented in software running of specialized hardware, full hardware, or a combination thereof configured to analyze a photographic scene to identify vehicular traffic in front of and around the first device 102. The on-board map data manager 115 can parse a sensor data stream 111, including sampled frames of video data, in order to identify an estimated traffic state for the scene captured by the optical sensors 110. During a training process, the first device 102 can upload the sensor data stream 111 to the second device 106 for further analysis or to generate an updated version of an on-board map database 116 to improve the detection of the estimated traffic state for the traffic state detection.

The on-board map data manager 115 can include the on-board map database 116, an index update engine 118, and an index delta 120. The on-board map data manager 115 can be a software and hardware module capable of storing the on-board map database 116 in a nonvolatile memory. The on-board map data manger 115 can also include the index update engine 118, such as a processor or processing system capable of integrating the index delta 120 into the on-board map database 116. The index delta 120 can be a list of a data segment or group of data segments stored in a segment of volatile or non-volatile memory including the key differences, between the on-board map database 116 and the current state of the actual map data, that reflects changes, construction, and added routes that must be applied to the on-board map database 116 in order to update the on-board map database 116 to the currently available accuracy.

The index update engine 118 can be, hardware memory controller managed by a state machine or software executed by the on-board map data manger 115, capable of integrating the index delta 120 with the unchanged portions of the on-board map database 116, which can be stored in the first device 102. The index update engine 118 can receive input from the index delta 120 and the on-board map database 116.

The index delta 120 can be an accumulation of the changes that are not present in current version of the on-board map database 116. The results of the analysis of the index delta 120 can determine whether the index update engine 118 can integrate the index delta 120 into the on-board map database 116. It is understood that the index delta 120 being excessively large, such as greater than a threshold value 117, can require an unacceptable time delay in integrating the index delta 120 into the on-board map database 116. The threshold value 117 can be defined as 10% of the memory in the on-board map database 116 or 50 MB, whichever is less.

$$\text{Threshold value} = \text{least of } (10\% \text{ of memory in the on-board map database 116 or 50 MB)}$$

$$\text{(EQ1)}$$

It is understood that the amount of memory allocated to the on-board map database 116 can be altered based on activities in the first device 102.

The index update engine 118 can output the estimate time, required to integrate the index delta 120 into the on-board map database 116, to the first device 102. If the estimated time is excessive, the first device 102 can choose to have the second device 106 execute the integration of the index delta 120. The integration of the index delta 120 is a process that copies the regions of the on-board map database 116 that are to be replaced into an updated map folder from the index delta into the on-board map data manager 115 or the cloud update manager 122.

The first device 102 can receive a map data update 121 over the network 104 from the second device 106. The map data update 121 can be the integration of the index delta 120, by a map activity manager 122, into a cloud map database 124. The second device 106 can send the map data update 121 to the first device 102 as an incremental update of the on-board map database 116. The first device 102 can verify that no additional integration of the index delta 120 is required. The first device 102 can copy the segments of the map data update 121 directly into the on-board map database 116 for use in route planning, execution of driving the planned route, and providing points-of-interest along the planned route.

The navigation system 100 can be operated by a user 112. The user 112 can include a person or an entity accessing or utilizing the navigation system 100 or a device therein. For example, the user 112 can include a person owning or operating the first device 102, a service, or a combination thereof. Also, for example, the user 112 can access or utilize the second device 106 through the first device 102, a service, or a combination thereof.

The navigation system 100 can further process a direct user input 114 from the user 112. The direct user input 114 can include a request for navigation assistance, location of a point of interest, parking assistance, restaurant assistance, lodging assistance, location of gas stations, event reservations, or a combination thereof. The direct user input 114 can be provided by or from the user 112 directly to or directly on the first device 102. The direct user input 114 can include the input or the stimulus directly for or related to corresponding software, application, feature, or a combination thereof.

The navigation system 100 can implement one or more embodiments without the direct user input 114. The navigation system 100 can further implement one or more embodiments using the direct user input 114 unrelated thereto. The direct user input 114 can include an increase in speed, a decrease in speed, a change of position within a lane, or changing lanes as prompted by the user 112. The direct user input 114 can also be verbal inputs that can cause the first device 102 to alter the execution of the planned route, by seeking the point-of-interest, stopping for gas or food, or locating a rest stop.

The second device 106 can generate the map data update 121 periodically for the first device 102 or when requesting service for route planning or identification or points-of-interest along the current roadway. The second device 106 can distribute the map data update 121 to other users approaching the location identified by the map data update 121 for the first device 102.

The second device 106 can transfer the map data update 121 in order to upload refinements to the on-board map database 116 for use by the first device 102. By way of an example, the second device 106 can apply the map data update 121 to the map activity manager 122 in order to maintain the accuracy of the cloud map database 124. The map activity manager 122 can parse the map data update 121 in order to update the cloud map database 124 by a cloud update engine 126. The cloud map database 124 can include a pictorial display of the roads, highways, and intersections for a given region. The cloud update engine 126, such as a processor or processing system capable of integrating the index delta 120 into the cloud map database 124. The map data update 121 sent to the first device 102 from the cloud map database 124 of the second device 106 conveys the current road conditions to the user 112 of the navigation system 100.

The navigation system 100 can include a process for merging the index delta 120 in the on-board map data manager 115, the cloud update manager 122, or a combination thereof. Depending on the size of the index delta 120, the on-board map data manager 115 can provide sufficient performance to allow the integration of the index delta 120 by the index update engine 118 of the on-board map data manager 115. If, however, the index delta 120 is excessively large, the navigation system 100 can rely on the second device 106, such as a cloud server 106, to integrate the index delta 120 into a cloud map database 124 by a cloud update engine 126 with much higher performance. Once the second device 106 has completed the update of the cloud map database 124, a map data update 121 can be transferred to the first device 102 through the network 104. The first device 102 can update the on-board map database 116 with the map data update 121 and then enable the on-board map database 116 for use on the first device 102.

It has been discovered that the navigation system 100 can reliably integrate the index delta 120 into the on-board map database 116, the cloud map database 124, or a combination thereof in order to achieve the best performance in bringing the on-board map database 116 up to date as quickly as possible. When the size of the index delta 120 is in excess of 2 megabytes (MB), as an example, the integration process can be performed in the second device 106 by the cloud update engine 126 integrating the index delta 120 into the cloud map database 124. The second device 106 can then parse the segments of the cloud map database 124, needed by the first device 102, into the map data update 121 for a simple copy into the on-board map database 116.

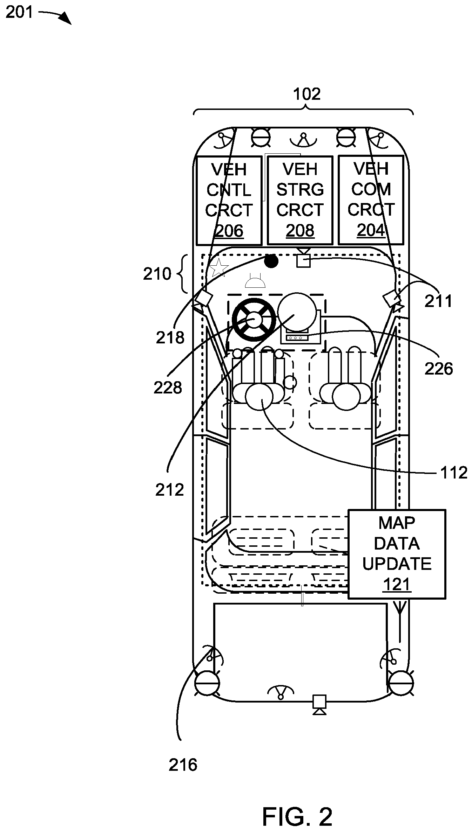

Referring now to FIG. 2, therein is shown example of a top view of a first device configured to provide the map data update mechanism in an embodiment of the navigation system 100 of FIG. 1. The navigation system 100 can include or interact with the first device 102.

The first device 102 can be an object or a machine used for transporting people or goods capable of automatically maneuvering or operating the object or the machine. The first device 102 can include vehicles accessible by the user 112 of FIG. 1 for control, maneuver, operation, or a combination thereof. For example, the first device 102 can include a car, a truck, a cart, a drone, or a combination thereof.

The first device 102 can further be controlled or maneuvered without the direct user input 114 of FIG. 1 corresponding to the maneuver or the movement. For example, the first device 102 can include a self-driving vehicle, or a vehicle with automatic maneuvering features, such as smart cruise control or preventative breaking. The first device 102 can include a smart cruise control feature, capable of setting and adjusting the travel speed of the first device 102 without the direct user input 114. Also, for example, the first device 102 can be controlled or maneuvered by the navigation system 100, including the navigation system 100 controlling or setting a cruising speed, lane position, or other physical maneuvers or movements of the first device 102.

The map data update 121 can further include information describing or representing surroundings or environment of the device or the vehicle reporting the map data update 121. For example, the map data update 121 can include speed data, navigation data, traffic data, or a combination thereof that can be loaded into the on-board map database 116 of FIG. 1 in order to provide up to date navigation control for the first device 102.

The first device 102 or other vehicles interfacing with the navigation system 100 can include a device, a circuit, one or more specific sensors, such as environmental sensors 210, or a combination thereof for providing assistance or additional information to the user 112 controlling, maneuvering, or operating the first device 102. The first device 102 or any other vehicles can include a vehicle communication circuit 204, a vehicle control circuit 206, a vehicle storage circuit 208, other interfaces, or a combination thereof.

The vehicle storage circuit 208 can include a functional unit or circuit integral to the corresponding first device 102 and configured to store and recall information. The vehicle storage circuit 208 can be a volatile memory, a nonvolatile memory, an internal memory, an external memory, or a combination thereof. For example, the vehicle storage circuit 208 can be a non-volatile storage such as non-volatile random access memory (NVRAM), Flash memory, disk storage, or a volatile storage such as static random access memory (SRAM).

The vehicle storage circuit 208 can store vehicle software, other relevant data, such as input information, information from sensors, processing results, information predetermined or preloaded by the navigation system 100 or vehicle manufacturer, or a combination thereof.

The vehicle control circuit 206 can include a function unit or circuit integral to the first device 102 and configured to execute or implement instructions. The vehicle control circuit 206 can execute or implement the vehicle software to provide the intelligence of the corresponding vehicle, the navigation system 100, or a combination thereof.

The vehicle control circuit 206 can be implemented in a number of different manners. For example, the vehicle control circuit 206 can be a processor, an application specific integrated circuit (ASIC) an embedded processor, a microprocessor, a hardware control logic, a hardware finite state machine (FSM), a digital signal processor (DSP), or a combination thereof. As a more specific example, the vehicle control circuit 206 can include an engine control unit, one or more central processing unit, the index update engine 118 of FIG. 1, or a combination thereof. The vehicle control circuit 206 can be configured to operate the first device 102, perform support functions for the first device 102, including monitoring the environmental sensors 210,

The vehicle communication circuit 204 can include a function unit or circuit integral to the corresponding vehicle, such as the first device 102, another vehicle, or a combination thereof. The vehicle communication circuit 204 can be configured to enable external communication to and from the corresponding vehicle. For example, the vehicle communication circuit 204 can permit the first device 102 to communicate with the second device 106 of FIG. 1.

The vehicle communication circuit 204 can also function as a communication hub allowing the corresponding control vehicle to function as part of the network 104 of FIG. 1 and not limited to be an end point or terminal circuit to the network 104. The vehicle communication circuit 204 can include active and passive components, such as microelectronics or an antenna, for interaction with the network 104. For example, the vehicle communication circuit 204 can include a modem, a transmitter, a receiver, a port, a connector, or a combination thereof for wired communication, wireless communication, or a combination thereof.

The vehicle communication circuit 204 can couple with the network 104 to send or receive information directly between the vehicle communication circuit 204 and the second device 106 as end points of the communication, such as for direct line-of-sight communication or peer-to-peer communication. The vehicle communication circuit 204 can further couple with the network 104 to send or receive information through a server or another intermediate device in between endpoints of the communication.

The first device 102 or other vehicles can further include various interfaces. The first device 102 can include one or more interfaces for interaction or internal communication between functional units or circuits of the first device 102. For example, the first device 102 can include one or more interfaces, such as software drivers, firmware, wire connections or buses, protocols, or a combination thereof, for the vehicle storage circuit 208, the vehicle control circuit 206, or a combination thereof.

The first device 102 or the other vehicles can further include one or more interfaces for interaction with an occupant, an operator or a driver, a passenger, or a combination thereof relative to the corresponding vehicle. For example, the first device 102 or the other vehicles can include a user interface 212 including input or output devices or circuits, such as a screen or touch screen, a speaker, a microphone, a keyboard or other input devices, an instrument panel, or a combination thereof.

The first device 102 can further include one or more interfaces along with switches or actuators for physically controlling movable components of the first device 102. For example, the first device 102 can include the one or more interfaces along with the controlling mechanisms to physically perform and control the maneuvering of the first device 102, such as for automatic driving, smart cruise control, or maneuvering features.

The functional units or circuits in the first device 102 can work individually and independently of the other functional units or circuits. The first device 102 can work individually and independently from the network 104, the second device 106, other devices or vehicles, or a combination thereof.

The functional units or circuits described above can be implemented in hardware. For example, one or more of the functional units or circuits can be implemented using a gate, circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

The environmental sensors 210 are each a device or a circuit for detecting or identifying environment of the corresponding vehicle. The environmental sensors 210 can detect, identify, determine, or a combination thereof, such as for status, surroundings or movement for the corresponding vehicle. The environmental sensors 210 can detect, identify, determine, or a combination thereof for environment within a cabin of the corresponding vehicle, an environment external to and surrounding the corresponding vehicle, or a combination thereof. The environmental sensors 210 can be implement for the first device 102.

For example, the environmental sensors 210 can include a user interface 212, an optical sensor 211, a radar sensor 216, a location-movement sensor 218, or a combination thereof. The user interface 212 can include a projector, a video screen, a touch screen, a speaker, or any combination thereof. The user interface 212 can display the on-board map database 116 of FIG. 1, a planned route, lane suggestions, speed warnings, vehicle system alerts and combinations thereof.

The optical sensor 211 can include a sensor for detecting or determining visual information representing the environment external to and surrounding of the corresponding vehicle. The optical sensor 211 can include a camera attached to or integral with the corresponding vehicle or device. For example, the optical sensor 211 can include a camera, such as forward facing camera, a video camera, a rear-view or back-up camera, a side-view or a blind-spot camera, or a combination thereof. Also, for example, the optical sensor 211 can include an infrared sensor, a night vision video camera, or a night vision sensor.

The optical sensor 211 can further include a camera on the first device 102 or another user device of the user 112 connected to and interacting with a vehicle. The optical sensor 211 can further include a cabin camera for detecting or determining visual information inside the vehicle or cabin of the vehicle.

The radar sensor 216 can include an object-detection system, device, or circuit. The radar sensor 216 can determine or identify an existence of an object or a target, such as an obstacle or another vehicle, external to the corresponding device or vehicle, a relative location or a distance between the object or the target and the corresponding device or vehicle, or a combination thereof.

The radar sensor 216 can utilize radio waves to determine or identify an existence of the object or the target, the relative location or a distance relative to the first device 102 or other corresponding device or vehicle, or a combination thereof. For example, the radar sensor 216 can include a proximity sensor or warning system, such as for an area in front of, behind, adjacent to or on a side of, or a combination thereof geographically or physically relative to the first device 102.

The location-movement sensor 218 can be a sensor for identifying or calculating a geographic location of the corresponding vehicle or device, determining a movement or speed of the corresponding vehicle or device, or a combination thereof. The location-movement sensor 218 can include an accelerometer, a speedometer, a Global Positioning System (GPS) receiver or device, a gyroscope or a compass, or a combination thereof. The first device 102 can include the environmental sensors 210 other than or in addition to the location-movement sensor 218. The location-movement sensor 218 can provide a gyroscope rate of change for monitoring turns and a speed from the speedometer.

The navigation system 100 can receive the index delta 120 of FIG. 1 describing or representing information regarding the changes that have taken place in the on-board map database 116 of FIG. 1 since it was last updated. The index delta 120 of FIG. 1 can be further processed with the vehicle control circuit 206, stored in the vehicle storage circuit 208, communicated to another device or vehicle through the vehicle communication circuit 204, or a combination thereof. In an alternative embodiment, the second device 106 can send the map index update 121 to the first device 102 for direct incorporation into the on-board map database 116. This embodiment can be less time consuming because the integration of the index delta 120 can be performed in the second device 106 and only the updated portions of the on-board map database 116 are transferred as the map index update 121.

As a more specific example, the vehicle communication circuit 204, the vehicle control circuit 206, the vehicle storage circuit 208, the optical sensors 110, one or more interfaces, or a combination thereof can be included in or make up the first device 102.

The navigation system 100 can utilize the map index update 121 from the second device 106, to dynamically update and map changes in the on-board map database 116 within the geographical area. The navigation system 100 can further utilize the map index update 121 to provide information to other vehicles near or planning to enter the region of the first device 102. As a more specific example, the navigation system 100 can use the map index update 121 to dynamically locate and map vehicles on the road and provide look-ahead traffic information. The navigation system 100 can further utilize the map index update 121 to control movement of the first device 102 at a lane level of granularity.

The navigation system 100 can provide the vehicle movement control 228 as a suggestion to the user 112 for maneuvering or operating the first device 102. Details regarding the utilization and processing of the traffic flow state 109 are discussed below.

The navigation system 100 can process and generate vehicle movement control 228 for controlling or maneuvering the first device 102. The vehicle movement control 228 is an instruction, a signal, a process, a method, a mechanism, or a combination thereof directing or controlling physical movement or travel of the first device 102.

The navigation system 100 can communicate the map data update 121 to the first device 102 from the second device 106 on fixed intervals, such as one minute intervals. The second device 106 can continue to deliver the map data update 121 until the on-board map database 116 of the first device 102 is completely up to date. For an illustrative example, the navigation system 100 supports the second device 106 conveying the map data update 121 to the first device 102 to other vehicles near or planning to enter the region reported by the first device 102.

Continuing with the example, the navigation system 100 can use the map data update 121 generated or provided to the first device 102 without the user input 114. The navigation system 100 can utilize the map data update 121 to provide information, assist maneuvering, control maneuvers, or a combination thereof for other vehicles near the first device 102.

Continuing with the example, the navigation system 100 can communicate the map data update 121 through the second device 106 to other devices or vehicles, or directly communicate to the other devices or vehicles, such as for a peer-to-peer communication system. The navigation system 100 can communicate the map data update 121 for informing other devices or vehicles of the location or status of points of interest along the route travelled by the first device 102 itself, other vehicles detected and identified around the first device 102, or a combination thereof.

As a more specific example, the navigation system 100 can use the map data update 121 to generate the vehicle movement control 228, such as for steering, braking, setting or adjusting travel speed, accessary control, or a combination thereof. Details regarding the processing of the vehicle movement control 228 are discussed below.

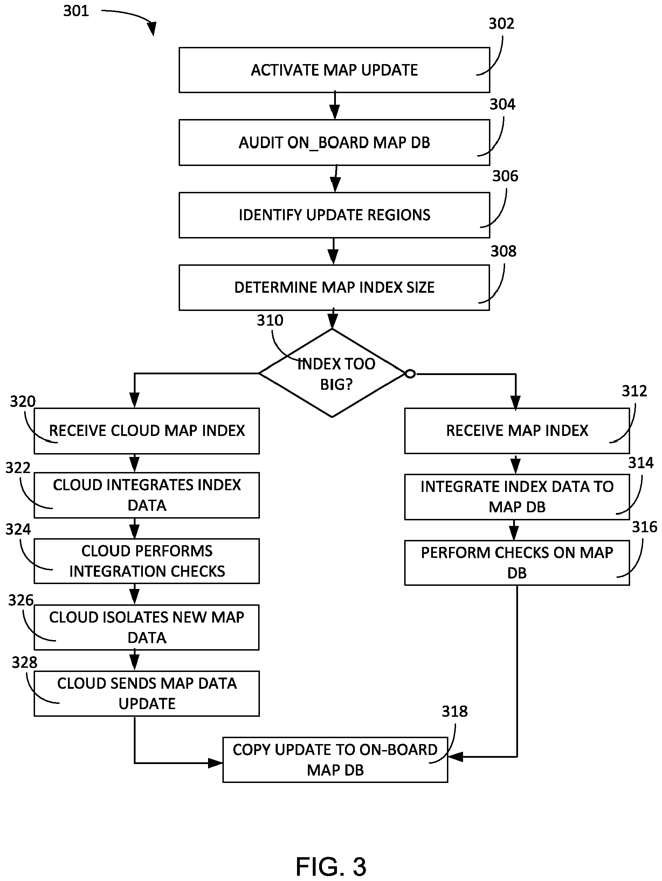

Referring now to FIG. 3, therein is shown an exemplary flow chart of a map update request 301 of the navigation system 100 of FIG. 1. The map update request 301 can include traffic lanes, construction zones, changes to points of interest, new roads, closed roads, or a combination thereof. The map update request 301 can be initiated by the user 112 of FIG. 1. The flow enters an activate map update module 302. The user 112 of the first device 102 of FIG. 1 can activate the map update request 301 through a verbal command or by selecting an update function on the user interface 212 of FIG. 2. The activate map update module 302 can be executed by the vehicle control circuit 206 of FIG. 2 in conjunction with the vehicle communication circuit 204 of FIG. 2. The purpose of the map update request 301 is to bring the on-board map database 116 of FIG. 1 up to a current configuration for the region of travel. The flow then proceeds to an audit on-board database 304.

The audit on-board database 304 be performed by the vehicle control circuit 206. A search of the on-board map database 116 can identify a changed region including a number of records (not shown) that have a date stamp older than six (6) months. The audit on-board database 304 can flag areas of the on-board database 116 that should be updated. The flow proceeds to an identify update regions module 306 that can be executed by the vehicle control circuit 206. The identify update regions module 306 can compile a list of regions of the on-board map database 116 that require update to form the index delta 120.

The flow proceeds to a determine map index size module 308 that can be executed by the vehicle control circuit 206 and the vehicle communication circuit 204 working in conjunction with the cloud update engine 126 of FIG. 1. The vehicle communication circuit 204 can transmit the regions that require update as determined by the identify update regions module 306 to the second device 106 of FIG. 1. The cloud update engine 126 of the second device 106 can assemble the index delta 120 in order to provide the index size that is required to update the on-board map database 116.

The flow can proceed to an index too big decision block 310 to determine where the update of the on-board map database 116 will be processed. If the index delta 120 is below a threshold value 117 set by whichever is less of 10% of the on-board map database 116 or 50MB, the vehicle control circuit 206 can perform the integration of the index delta 120 into the on-board map database 116. It is understood that the determination of the threshold value 117 can be impacted by the other tasks assigned to the vehicle control circuit 206, the tasks can include monitoring a device, a circuit, one or more specific sensors, such as environmental sensors 210, or a combination thereof for providing assistance or additional information to the user 112 controlling, maneuvering, or operating the first device 102. The flow would then proceed to a receive map index module 312, in which the vehicle communication circuit 204 and the vehicle storage circuit 208 of FIG. 2 can receive and store the index delta 120 from the second device 106.

The flow can then proceed to an integrate index data to map database module 314. The vehicle control circuit 206 can parse the index delta 120 in the vehicle storage circuit 208 in order to update the regions of the on-board map database 116 that were identified by the identify update regions module 306. The integrate index data to map database module 314 can delete the existing regions that are due for update and the updated regions can be copied to the on-board map database 116. Since the updated regions of the index delta 120 are likely to be of a different size than the original files, the on-board map database 116 can be created in the vehicle storage circuit 208. The on-board map database 116 is an interleaved version of the map database containing changed and unchanged segments that represent the current map conditions. As the unchanged regions of the on-board map database 116 are copied to the on-board map database 116, any changed region encountered can be integrated from the index delta 120. Once the changed region has been copied, subsequent portions of the unchanged regions can be copied to the on-board map database 116.

When the regions of the on-board map database 116 have been updated, the flow can proceed to a perform checks on map database module 316. The perform checks on map database module 316 can be performed by the vehicle control circuit 206. The vehicle control circuit 206 can verify the new data context, verify the change set information matches the index delta 120, verify that there are no index log errors, and verify CODEC compatibility. These checks will be described in a subsequent drawing.

The flow then proceeds to a copy update to on-board map database module 318. The copy update to on-board map database module 318 can be executed by the vehicle control circuit 206 and the vehicle storage circuit 208 in order to copy the map update into the on-board map database 116. The on-board map database 116 would then be ready for route planning, route execution, and point of interest identification. This ends the first device path of the map update request 301. The first device 102 can then enable the on-board map database 116 for use.

If the decision at the index too big decision block 310 indicates that the index delta 120 is too large to the first device 102 to handle in a reasonable amount of time, the flow can proceed to a receive cloud index map module 320, where the control of the map update request 301 is transferred to the second device 106. It is understood that the processing of the second device 106 far exceeds the first device 102 because the second device 106 has no memory limits, since additional memory can be allocated from a pool of storage devices attached to the second device 106. Further the cloud update engine 126 of FIG. 1 is dedicated to only the map update request 301 and the performance or the cloud update engine 126 can be significantly higher than the vehicle control circuit 206. The combination of these factors can reduce the processing time of the map update request 301.

The flow proceeds to a cloud integrates index data module 322. The cloud integrates index data module 322 can be executed by the cloud update engine 126, utilizing as much memory resources as makes sense. One of ordinary skill would understand that beyond a certain amount of memory added to the map update request 301 process makes no change to the execution time. The cloud update engine 126 can allocate additional memory as required to complete the map update request 301 in as short a time as possible. Since the updated regions of the index delta 120 are likely to be of a different size than the original files, a map update can be created in the memory of the second device 106. As the unchanged regions of the cloud map database 124 are copied to the map update, any changed region encountered can be copied from the index delta 120. Once the changed region has been copied to the map update, subsequent of the unchanged regions can be copied to the map update and repeated as necessary to complete the map update request 301.

The flow proceeds to a cloud performs integration checks module 324. The cloud performs integration checks module 324 can be performed by the cloud update module 126. The cloud update module 126 can verify the new data context, verify the change set information matches the index delta 120, verify that there are no index log errors, and verify CODEC compatibility. These checks will be described in a subsequent drawing.

The flow proceeds to a cloud isolates new map data module 326. The cloud isolates new map data module 326 can generate the map data update 121 of FIG. 1, which provides segments of the on-board map database 116 that can be copied directly into the vehicle storage circuit 208 to be a portion of the on-board map database 116. This service reduces the overhead required of the vehicle control circuit 206 because the checks of the database have already been performed by the second device 106.

The flow proceeds to the copy update to the on-board map database module 318. The copy update to on-board map database module 318 can be executed by the vehicle control circuit 206 and the vehicle storage circuit 208 in order to copy the map update 549 into the on-board map database 116. The on-board map database 116 would then be ready for route planning, route execution, and point of interest identification. This ends the first device path of the map update request 301.

It has been discovered that the map update request 301 can be optimized to keep the execution time to a minimum. Based on the size of the index delta 120, the integration of the index delta 120 can be executed by the first device 102, with limited resources, or it can be executed by the second device 106, which far exceeds the resource availability of the first device 102. The second device 106 can apply significantly more memory and the control circuit of the second device 106 can be dedicated to the map update request 301. If the second device 106 is chosen to perform the map update request 301, the second device 106 can reduce the overhead required from the first device 102, by sending the map data update 121 that has already been error checked and only requires being copied to the on-board map database 116.

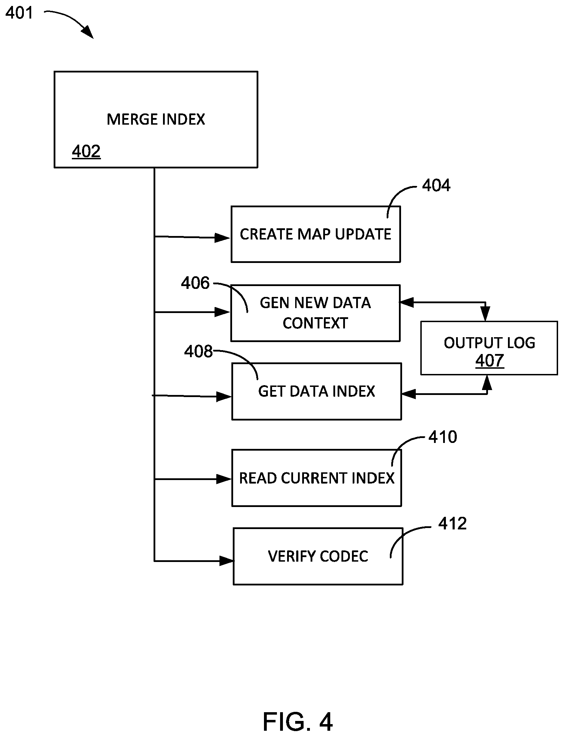

Referring now to FIG. 4, therein is shown an exemplary flow chart of the map data update integration checks 401 of the navigation system 100 of FIG. 1. The exemplary flow chart of the map data update integration checks 401 depicts a merge index process 402, which can be executed by a control circuit, such as the vehicle control circuit 204 of FIG. 2 or the cloud update engine 126 of FIG. 1. By way of an example, the map data update integration checks 401 can be executed on the first device 102 by the vehicle control circuit 206 of FIG. 2. The merge index process 402 can update the on-board map database 116 or the cloud map database 124 by the similar tasks. The cloud update engine 126 can apply more resources in memory and processor clock cycles, because the cloud server of the second device 106 of FIG. 1 is dedicated to this process alone with no additional activities to slow it down.

A create map update 404 can assign a segment of memory to create a map update, which will be copied to the on-board map database 116. The create map update 404 can verify that no error log has been created.

A generate new data context 406 can verify the regions of the current version of the on-board map database 116 that will be replaced. The generate new data context 406 can also identify the regions of the on-board map database that remain unchanged. The generate new data context 406 can verify an output log 407 for the process in order to identify any errors that might have occurred.

A get data index module 408 can retrieve the index delta 120 of FIG. 1 for a change set information. The get data index module 408 can detail the size of the index delta 120 based on accumulated changes to the regional map (not shown). The vehicle control circuit 206 can verify the output log 407 is error free.

A verify CODEC module 412 can submit the updated version of the on-board map database 116 can be submitted to the CODEC without generating an error log. Once the map data update integration checks 401 are completed, the first device 192 can have a high confidence that the on-board map database 116 is fully operational and all of the updated regions have been incorporated. When the map data update integration checks 401 is successfully completed, the content of the on-board map database 116 can be enabled for use by the first device 102.

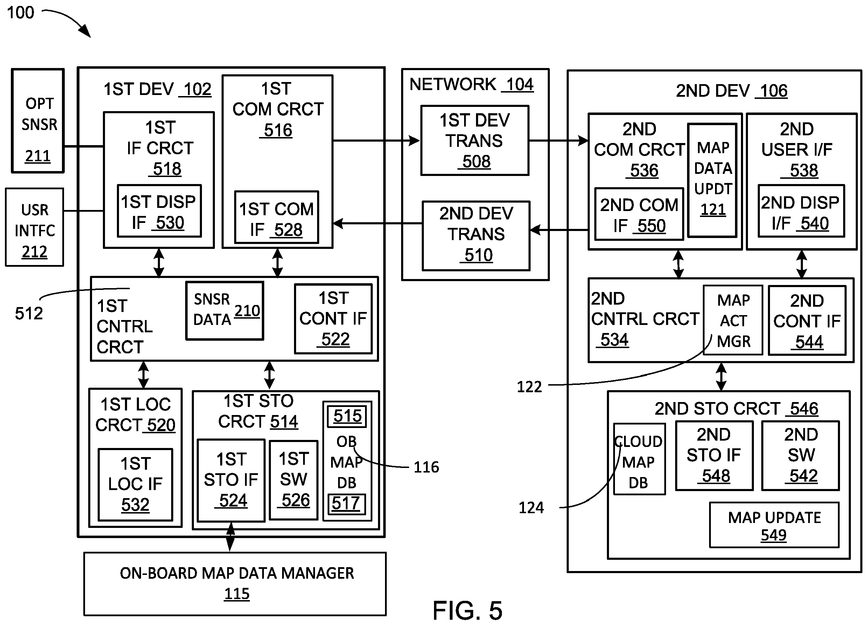

Referring now to FIG. 5, therein is shown an exemplary block diagram of the navigation system 100 in an embodiment. The navigation system 100 can include the first device 102, the network 104, and the second device 106. The first device 102 can send information in a first device transmission 508 over the network 104 to the second device 106. The second device 106 can send information in a second device transmission 510 over the network 104 to the first device 102 or the other vehicles 320 of FIG. 3.

For illustrative purposes, the navigation system 100 is shown with the first device 102 as a client device, although it is understood that the navigation system 100 can include the first device 102 as a different type of device. For example, the first device 102 can be a server containing the first display interface 530 coupled to the user interface 212.

Also, for illustrative purposes, the navigation system 100 is shown with the second device 106 as a server, although it is understood that the navigation system 100 can include the second device 106 as a different type of device. For example, the second device 106 can be a client device. By way of an example, the navigation system 100 can be implemented entirely on the first device 102. The second device 106 can provide training and enhancement of the on-board map database 116 of FIG. 1.

Also, for illustrative purposes, the navigation system 100 is shown with interaction between the first device 102 and the second device 106. However, it is understood that the first device 102 can be a part of or the entirety of an autonomous vehicle, a smart vehicle, or a combination thereof. Similarly, the second device 106 can similarly interact with the first device 102 representing the autonomous vehicle, the intelligent vehicle, or a combination thereof.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The first device 102 can include a first control circuit 512, a first storage circuit 514, a first communication circuit 516, a first interface circuit 518, and a first location circuit 520. The first control circuit 512 can include a first control interface 522. The first control circuit 512 can execute a first software 526 to provide the intelligence of the navigation system 100.

The first control circuit 512 can be implemented in a number of different manners. For example, the first control circuit 512 can be a processor, an application specific integrated circuit (ASIC) an embedded processor, a microprocessor, a hardware control logic, a hardware finite state machine (FSM), a digital signal processor (DSP), or a combination thereof. The first control interface 522 can be used for communication between the first control circuit 512 and other functional units or circuits in the first device 102. The first control interface 522 can also be used for communication that is external to the first device 102.

The first control interface 522 can receive information from the other functional units/circuits or from external sources, or can transmit information to the other functional units/circuits or to external destinations. The external sources and the external destinations refer to sources and destinations external to the first device 102.

The first control interface 522 can be implemented in different ways and can include different implementations depending on which functional units/circuits or external units/circuits are being interfaced with the first control interface 522. For example, the first control interface 522 can be implemented with a pressure sensor, an inertial sensor, a microelectromechanical system (MEMS), optical circuitry, waveguides, wireless circuitry, wireline circuitry, or a combination thereof.

The first storage circuit 514 can store the first software 526 and the on-board map database 116. The first storage circuit 514 can also store the relevant information, such as data representing incoming images, data representing previously presented image, sound files, or a combination thereof.

The first storage circuit 514 can be a volatile memory, a nonvolatile memory, an internal memory, an external memory, or a combination thereof. For example, the first storage circuit 514 can be a nonvolatile storage such as non-volatile random-access memory (NVRAM), Flash memory, disk storage, or a volatile storage such as static random-access memory (SRAM).

The first storage circuit 514 can include a first storage interface 524. The first storage interface 524 can be used for communication between the first storage circuit 514 and other functional units or circuits in the first device 102, such as the on-board map database 116. The first storage interface 524 can also be used for communication that is external to the first device 102.

The first storage interface 524 can receive information from the other functional units/circuits or from external sources, or can transmit information to the other functional units/circuits or to external destinations. The external sources and the external destinations refer to sources and destinations external to the first device 102. The first storage interface 524 can receive input from and source data to the on-board map data manager 115.

The first storage interface 524 can include different implementations depending on which functional units/circuits or external units/circuits are being interfaced with the first storage circuit 514. The first storage interface 524 can be implemented with technologies and techniques similar to the implementation of the first control interface 522.

The first communication circuit 516 can enable external communication to and from the first device 102. For example, the first communication circuit 516 can permit the first device 102 to communicate with the second device 106 and the network 104.

The first communication circuit 516 can also function as a communication hub allowing the first device 102 to function as part of the network 104 and not limited to be an endpoint or terminal circuit to the network 104. The first communication circuit 516 can include active and passive components, such as microelectronics or an antenna, for interaction with the network 104.

The first communication circuit 516 can include a first communication interface 528. The first communication interface 528 can be used for communication between the first communication circuit 516 and other functional units or circuits in the first device 102. The first communication interface 528 can receive information from the second device 106 for distribution to the other functional units/circuits or can transmit information to the other functional units or circuits.

The first communication interface 528 can include different implementations depending on which functional units or circuits are being interfaced with the first communication circuit 516. The first communication interface 528 can be implemented with technologies and techniques similar to the implementation of the first control interface 522.

The first interface circuit 518 allows the user 112 of FIG. 1 to interface and interact with the first device 102. The first interface circuit 518 can include an input device and an output device. Examples of the input device of the first interface circuit 518 can include a keypad, a touchpad, soft-keys, a keyboard, a microphone, an infrared sensor for receiving remote signals, the optical sensor 110, or any combination thereof to provide data and communication inputs. By way of an example, the optical sensor 211 can connect to the first interface circuit 518 through a wired or wireless connection. The first interface circuit 518 can pass the input from the optical sensor 211 to the first control circuit 512 for processing and storage.

The first interface circuit 518 can include a first display interface 530. The first display interface 530 can include an output device. The first display interface 530 can couple the user interface 212 including a projector, a video screen, a touch screen, a speaker, a microphone, a keyboard, and combinations thereof.

The first control circuit 512 can operate the first interface circuit 518 to display information generated by the navigation system 100 and receive input from the user 112 of FIG. 1. The first control circuit 512 can also execute the first software 526 for the other functions of the navigation system 100, including receiving location information from the first location circuit 520. The first control circuit 512 can further execute the first software 526 for interaction with the network 104 via the first communication circuit 516. The first control unit 512 can operate the map update request 301 of FIG. 3.

The first control circuit 512 can receive location information from the first location circuit 520. The first control circuit 512 can operate the on-board map data manager 115 in order to current data from the on-board map database 116 for display on the user interface 212 and generate the control guidance instructions and maneuvering instructions 554 to autonomously drive or assist in driving the first device 102. The maneuvering instructions 554 can include increase speed, decrease speed, lane change suggestions, lane boundary warnings, and traffic avoidance alerts.

The first location circuit 520 can be implemented in many ways. For example, the first location circuit 520 can function as at least a part of the global positioning system, an inertial navigation system, a cellular-tower location system, a gyroscope, or any combination thereof. Also, for example, the first location circuit 520 can utilize components such as an accelerometer, gyroscope, or global positioning system (GPS) receiver.

The first location circuit 520 can include a first location interface 532. The first location interface 532 can be used for communication between the first location circuit 520 and other functional units or circuits in the first device 102, including the first control circuit 512.

The first location interface 532 can receive information from the other functional units/circuits or from external sources, or can transmit information to the other functional units/circuits or to external destinations. The external sources and the external destinations refer to sources and destinations external to the first device 102.

The first location interface 532 can include different implementations depending on which functional units/circuits or external units/circuits are being interfaced with the first location circuit 520. The first location interface 532 can be implemented with technologies and techniques similar to the implementation of the first control circuit 512.

The second device 106 can be optimized for implementing an embodiment of the present invention in a multiple device embodiment with the first device 102. The second device 106 can provide the additional or higher performance processing power compared to the first device 102. The second device 106 can include a second control circuit 534, a second communication circuit 536, a second user interface 538, and a second storage circuit 546. It is understood that the second device 106 can have a performance advantage over the first device 102, because the entire resource second control circuit 534 can operate on the map update request 301 and the second storage circuit can support more memory for support of the cloud map database 124. This is in comparison with the first device 102 which must share resources, of the first control circuit 512 and the first storage circuit 514, to maintain the operation of the first device 102. The first control circuit 512 or the second control circuit 534 can identify an unchanged region 515 and a changed region 517 in the on-board map database 116. The unchanged region 515 can be the areas of the on-board map database 116 that remain up-to-date with no noted changes in routes or points of interest. The changed regions 517 can be the areas of the on-board map database 116 that require data from the index delta 120 in order to be brought up-to-date.

The second user interface 538 allows an operator (not shown) to interface and interact with the second device 106. The second user interface 538 can include an input device and an output device. Examples of the input device of the second user interface 538 can include a keypad, a touchpad, soft-keys, a keyboard, a microphone, or any combination thereof to provide data and communication inputs. Examples of the output device of the second user interface 538 can include a second display interface 540. The second display interface 540 can include a display, a projector, a video screen, a speaker, or any combination thereof.

The second control circuit 534 can transmit the map data update 121 through the second communication circuit 536. The second control circuit 536 can verify the content of the map data update 121 does indeed represent the updated version of the on-board map database 116 of the first device 102, by examining the map data update integration checks 401 of FIG. 4. Once the map data update 121 has been verified, the second control circuit 534 can transfer the map data update 121 through the second storage circuit 546 to the map activity manager 122 for processing and further distribution. The map activity manager 122 can parse the cloud map database 124 to generate the map data update 121 that can be transmitted by the second communication circuit 534 to the first device 102.

The second control circuit 534 can execute a second software 542 to provide the intelligence of the second device 106 of the navigation system 100. The second software 542 can operate in conjunction with the first software 526. The second control circuit 534 can provide additional performance compared to the first control circuit 512.

The second control circuit 534 can operate the second user interface 538 to display information. The second control circuit 534 can also execute the second software 542 for the other functions of the navigation system 100, including operating the second communication circuit 536 to communicate with the first device 102 over the network 104.

The second control circuit 534 can be implemented in a number of different manners. For example, the second control circuit 534 can be a processor, an embedded processor, a microprocessor, hardware control logic, a hardware finite state machine (FSM), a digital signal processor (DSP), or a combination thereof.

The second control circuit 534 can include a second control interface 544. The second control interface 544 can be used for communication between the second control circuit 534 and other functional units or circuits in the second device 106. The second control interface 544 can also be used for communication that is external to the second device 106.

The second control interface 544 can receive information from the other functional units/circuits or from external sources, or can transmit information to the other functional units/circuits or to external destinations. The external sources and the external destinations refer to sources and destinations external to the second device 106.

The second control interface 544 can be implemented in different ways and can include different implementations depending on which functional units/circuits or external units/circuits are being interfaced with the second control interface 544. For example, the second control interface 544 can be implemented with a pressure sensor, an inertial sensor, a microelectromechanical system (MEMS), optical circuitry, waveguides, wireless circuitry, wireline circuitry, or a combination thereof.

The second storage circuit 546 can store the second software 542. The second storage circuit 546 can also store the information such as data representing incoming images, data representing previously presented image, sound files, or a combination thereof. The second storage circuit 546 can be sized to provide the additional storage capacity to supplement the first storage circuit 514. The second storage circuit 546 can transmit the map data update 121 to the first device 102. The second storage circuit 546 can pass the map data update 121 to incorporate updates to the cloud map database 124 and the cloud update engine 126.

For illustrative purposes, the second storage circuit 546 is shown as a single element, although it is understood that the second storage circuit 546 can be a distribution of storage elements. Also, for illustrative purposes, the navigation system 100 is shown with the second storage circuit 546 as a single hierarchy storage system, although it is understood that the navigation system 100 can include the second storage circuit 546 in a different configuration. For example, the second storage circuit 546 can be formed with different storage technologies forming a memory hierarchal system including different levels of caching, main memory, rotating media, or off-line storage.

The second storage circuit 546 can be a controller of a volatile memory, a nonvolatile memory, an internal memory, an external memory, or a combination thereof. For example, the second storage circuit 546 can be a controller of a nonvolatile storage such as non-volatile random-access memory (NVRAM), Flash memory, disk storage, or a volatile storage such as static random access memory (SRAM). The second control circuit 534 can support the map update request 301 by allocating a segment of the second storage circuit 546 to a map update 549 for use during the integration of the index delta 120.

The second storage interface 548 can receive information from the other functional units/circuits or from external sources, or can transmit information to the other functional units/circuits or to external destinations. The external sources and the external destinations refer to sources and destinations external to the second device 106.

The second storage interface 548 can include different implementations depending on which functional units/circuits or external units/circuits are being interfaced with the second storage circuit 546. The second storage interface 548 can be implemented with technologies and techniques similar to the implementation of the second control interface 544. The second storage circuit 546 can receive real world updates for the cloud map database 124 for transfer of the map data update 121 transmitted to the on-board map data manager 115 in the first device 102.

The second communication circuit 536 can enable external communication to and from the second device 106. For example, the second communication circuit 536 can permit the second device 106 to communicate with the first device 102 over the network 104. By way of an example, the second device 106 can provide the map data update 121 to the first device 102.

The second communication circuit 536 can also function as a communication hub allowing the second device 106 to function as part of the network 104 and not limited to be an endpoint or terminal unit or circuit to the network 104. The second communication circuit 536 can include active and passive components, such as microelectronics or an antenna, for interaction with the network 104.

The second communication circuit 536 can include a second communication interface 550. The second communication interface 550 can be used for communication between the second communication circuit 536 and other functional units or circuits in the second device 106. The second communication interface 550 can receive information from the other functional units/circuits or can transmit information to the other functional units or circuits.

The second communication interface 550 can include different implementations depending on which functional units or circuits are being interfaced with the second communication circuit 536. The second communication interface 550 can be implemented with technologies and techniques similar to the implementation of the second control interface 544.

The first communication circuit 516 can couple with the network 104 to receive the map data update 121 from the second device 106 in the second device transmission 510. The second device 106 can receive information in the second communication circuit 536 from the first device transmission 508 of the network 104. By way of an example, the first device 102 can request the second device 106 execute the map update request 301 when the index delta 120 is determined to too large for the first device 102 to perform the map update request 301 efficiently.

The second communication circuit 536 can couple with the network 104 to send information to the first device 102, including the updates for the on-board map data manager 115 in the second device transmission 510. The first device 102 can receive information in the first communication circuit 516 from the second device transmission 510 of the network 104. The navigation system 100 can be executed by the first control circuit 512, the second control circuit 534, or a combination thereof. For illustrative purposes, the second device 106 is shown with the partition containing the second user interface 538, the second storage circuit 546, the second control circuit 534, and the second communication circuit 536, although it is understood that the second device 106 can include a different partition. For example, the second software 542 can be partitioned differently such that some or all of its function can be in the second control circuit 534 and the second communication circuit 536. Also, the second device 106 can include other functional units or circuits not shown in FIG. 5 for clarity.

The functional units or circuits in the first device 102 can work individually and independently of the other functional units or circuits. The first device 102 can work individually and independently from the second device 106 and the network 104.

The functional units or circuits in the second device 106 can work individually and independently of the other functional units or circuits. The second device 106 can work individually and independently from the first device 102 and the network 104.

The functional units or circuits described above can be implemented in hardware. For example, one or more of the functional units or circuits can be implemented using a gate array, an application specific integrated circuit (ASIC), circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

For illustrative purposes, the navigation system 100 is described by operation of the first device 102 and the second device 106. It is understood that the first device 102 and the second device 106 can operate any of the modules and functions of the navigation system 100.

By way of a further example, the first device 102 can be the autonomous vehicle or the driver assisted vehicle. The first interface circuit 518 can receive input from the optical sensor 211 of FIG. 2. The map data update 121 can be generated by the second control circuit 534 from the update of the cloud map database 124. The map data update 121 can be sent through the second communication circuit 550 and the network 104 to the first device 102 for processing by the first control circuit 512 and the on-board map database manager 115.

It has been discovered that the second device 106 can transfer the map data update 121 to the first device 102 in order to provide updates for the on-board map database manager 115. As an example, the second control circuit 534 can verify the map data update 121 and pass the information through the network 104 to the on-board map database manager 115 for incorporation into the on-board map database 116.

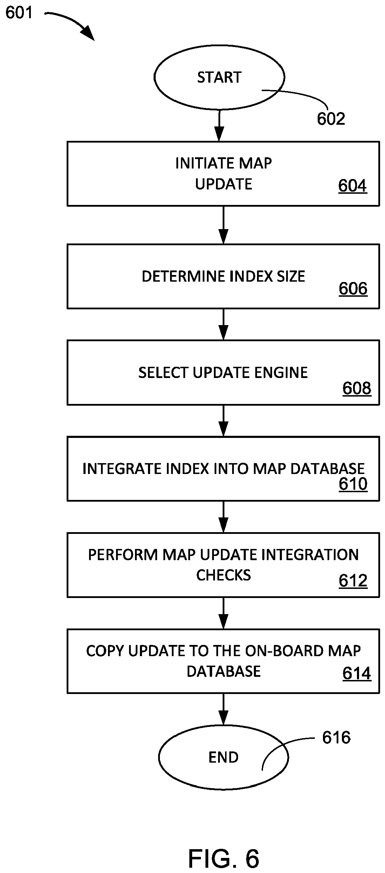

Referring now to FIG. 6, therein is shown an exemplary operational flow chart 601 of the navigation system 100 of FIG. 1 in an embodiment of the present invention. The exemplary operational flow chart 601 of the navigation system 100 depicts a start block 602 indicating that the first device 102 of FIG. 1 requires an update of the on-board map database 116. The flow proceeds to an initiate map update block 604 in which first device 102 has detected that the on-board map database 116 is out of date and can contain errors. The first control circuit 512 of FIG. 5 can request support of the second device 106 in performing the map update request 301 of FIG. 1.

The flow proceeds to a determine index size block 606, in which size of the index delta 120 of FIG. 1 can be determined. It is understood that the second device 106 can have more data processing capability and speed than the first device 102, so if the index delta 120 is deemed to be too large, the map update request 301 could be performed by the second device 106.

The flow proceeds to a select update engine block 608. Here, the evaluation of the size of the index delta 120 can determine whether the index update engine 118 of FIG. 1 or the cloud update engine 126 of FIG. 1 will perform the integration of the index delta 120 into the map database. It is understood that the second device 106 can provide more and higher performance resources for the second control circuit 534 and the second storage circuit 546. If the index delta 120 is deemed to be large, the map update request 301 will be performed by the second device 106.

The flow then proceeds to an integrate index into map database block 610. The integration of the index delta 120 into the cloud map database 124 can be executed by the cloud update engine 126, utilizing as much memory resources as makes sense. One of ordinary skill would understand that beyond a certain amount of memory added to the map update request 301 process makes no change to the execution time. The cloud update engine 126 can allocate additional memory as required to complete the map update request 301 in as short a time as possible. Since the updated regions of the index delta 120 are likely to be of a different size than the original files, the update folder 549 of FIG. 5 can be created in the memory of the second device 106. As the unchanged regions of the cloud map database 124 are instantiated in the map update 549, any changed region encountered can be copied from the index delta 120. Once the changed region has been copied to the map update 549, subsequent of the unchanged regions can be copied to the map update 549 and repeated as necessary to complete the map update request 301.

The flow then proceeds to a perform map update integration check block 612. The second control circuit 534 perform a suite of integration checks including the create map update 404, the generate new data context 406, the get data index 408, the read current index 410, and the verify codec 412. The ability of the second control circuit 534 to execute these checks in rapid succession provides an advantage over performing the integration and the integration checks in the first device 102. While the first control circuit 512 and the first storage circuit 514 are a shared resource that also monitors the environmental sensors 210 of FIG. 1 and controls the movement of the first device 102 through the vehicle movement control 228 of FIG. 2, the second control circuit 534 and the second storage circuit 546 can dedicate the full resource to performing the integration and the integration checks.

The flow can then proceed to a copy update to the on-board map database block 614. The second device 106 can transmit the map data update 121 to the first device 102 for incorporation into the on-board map database 116. Advantageously the second device has already completed the integration checks and the map data update is known to be accurate. The first device can complete the map update request 301 by copying the map data update 121 to the on-board map database 116 and is ready to be used by the first device 102.

The flow proceeds to an end 616, in which the first device 102 can receive the map data update 121, present it on the user interface 212 of FIG. 2. It is understood that the user interface 212 can show can present a highlighted overlay of the map data update 121 can be presented on the user interface 212 by itself.

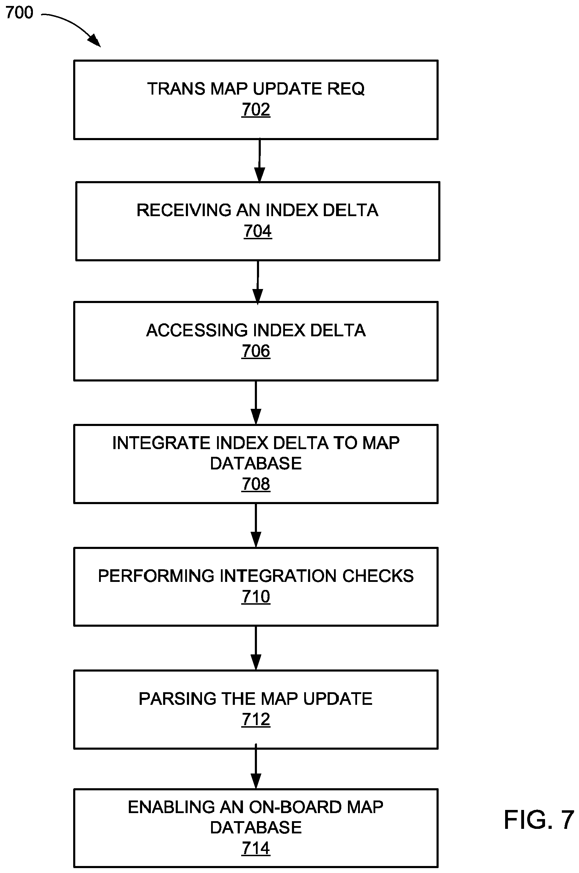

Referring now to FIG. 7, therein is shown a flow chart of a method 700 of operation of a navigation system 100 of FIG. 1 in an embodiment of the present invention. The method 700 includes: transmitting a map update request; receiving an index delta in response to the map update request in a block 702; receiving an index delta in response to the map update request in a block 704; accessing the index delta includes a map update allocated for the map update request in a block 706; integrating the index delta into a map database copied into the map update in a block 708; performing an integration check on the map update in a block 710; parsing the map update includes generating a map data update in a block 712; and enabling an on-board map database including the map data update for displaying on and controlling a device in a block 712.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations that fall within the scope of the included claims. All matters set forth herein or shown in the accompanying drawings are to be interpreted in an illustrative and non-limiting sense.

**Claims**

1. A navigation system (100) comprising:

   a communication circuit (516) configured to:

      transmit a map update request (301), and
      receive an index delta (120) in response to the map update request (301);

   a control circuit (512), coupled to the communication circuit (516), configured to:

      access the index delta (120), the index delta (120) including a map update (549) allocated for the map update request (301);
integrate the index delta (120) into a map database (124) copied into the map update (549);
perform an integration check (401) on the map update (549);
parse the map update (549), including generating a map data update (121); and
enable an on-board map database (116) including the map data update (121) for display on and control of a device (102).

2. The system (100) as claimed in claim 1 wherein the control circuit (512), is further configured to:

allocate the map update (549) in a storage circuit (514);
instantiate an unchanged region (515) of the on-board map database (116) into the map update (549);
insert the index delta (120) into a changed region (517) of the on-board map database (116); and
enable the on-board map database (116) for navigational control of the device (102).

3. The system (100) as claimed in claim 1 or 2, wherein the control circuit (512) is configured to select an index update engine (118) to perform the map update request (301) when the size of the index delta (120) is below a threshold value (117).

4. The system (100) as claimed in any of the preceding claims, wherein the control circuit (512) is configured to select a cloud update engine (126) to perform the map update request (301) when the size of the index delta (120) exceeds a threshold value (117).

5. The system (100) as claimed in any of the preceding claims, wherein the control circuit (512) is configured to perform the integration check (401) on the map update (549) includes the control circuit (512) detects error logs for a create map update (404), a generate new data context (406), a get data index (408), a read current index (410), and a verify codec (412).

6. The system (100) as claimed in any of the preceding claims, wherein the control circuit (512) is configured to generate the index delta (120) by an audit on-board map database (304) to identify a changed region (517) of the on-board map database (116) to become part of the index delta (120).

7. The system (100) as claimed in any of the preceding claims, wherein the control circuit (512) is configured to adjust a threshold value (117) based on tasks including monitoring a device, a circuit, an environmental sensor (210), or a combination thereof for providing information to a user (112) controlling, maneuvering, or operating the device (102).

8. The system (100) as claimed in any of the preceding claims, wherein the communication circuit (516) is configured to receive the map data update (121), through a network (104) for updating the on-board map database (116) and enable navigation control of the device (102).

9. A method (700) of operation for a navigation system (100) comprising:

transmitting a map update request (301);
receiving an index delta (120) in response to the map update request (301);
accessing the index delta (120), the index delta (120) including a map update (549) allocated for the map update request (301);
integrating the index delta (120) into a map database (124) copied into the map update (549);
performing an integration check (401) on the map update (549);
parsing the map update (549), including generating a map data update (121); and
enabling an on-board map database (116) including the map data update (121) for displaying on and controlling a device (102).

10. The method (700) as claimed in claim 9 further compromising:

allocating the map update (549) in a storage circuit (514);
instantiating an unchanged region (515) of the on-board map database (116) into the map update (549);
inserting the index delta (120) into a changed region (517) of the on-board map database (116); and
enabling the on-board map database (116) for navigational control of the device (102).

11. The method (700) as claimed in claim 9 or 10, further comprising selecting an index update engine (118) to perform the map update request (301) when the size of the index delta (120) is below a threshold value (117).

12. The method (700) as claimed in any of the claims 9 to 11, further comprising selecting a cloud update engine (126) to perform the map update request (301) when the size of the index delta (120) exceeds a threshold value (117).

13. The method (700) as claimed in any of the claims 9 to 12, further comprising performing the integration check (401) on the map update (549) includes the control circuit (512) detecting error logs for a create map update (404), a generate new data context (406), a get data index (408), a read current index (410), and a verify codec (412).

14. The method (700) as claimed in any of the claims 9 to 13, further comprising adjusting a threshold value (117) based on tasks including monitoring a device, a circuit, an environmental sensor (210), or a combination thereof for providing information to a user (112) controlling, maneuvering, or operating the device (102).

FIG. 1

FIG. 2

301

ACTIVATE MAP UPDATE — 302

AUDIT ON_BOARD MAP DB — 304

IDENTIFY UPDATE REGIONS — 306

DETERMINE MAP INDEX SIZE — 308

310 — INDEX TOO BIG?

RECEIVE CLOUD MAP INDEX — 320

CLOUD INTEGRATES INDEX DATA — 322

CLOUD PERFORMS INTEGRATION CHECKS — 324

CLOUD ISOLATES NEW MAP DATA — 326

CLOUD SENDS MAP DATA UPDATE — 328

RECEIVE MAP INDEX — 312

INTEGRATE INDEX DATA TO MAP DB — 314

PERFORM CHECKS ON MAP DB — 316

COPY UPDATE TO ON-BOARD MAP DB — 318

FIG. 3

401

MERGE INDEX

402

404

CREATE MAP UPDATE

406

GEN NEW DATA
CONTEXT

OUTPUT LOG
407

408

GET DATA INDEX

410

READ CURRENT INDEX

412

VERIFY CODEC

FIG. 4

**FIG. 5**

100

**1ST DEV 102**

**1ST COM CRCT 516** — 1ST COM IF 528

**1ST IF CRCT 518** — 1ST DISP IF 530

OPT SNSR 211

USR INTFC 212

512

**1ST CNTRL CRCT**

1ST CONT IF 522

SNSR DATA 210

**1ST STO CRCT 514** — 1ST STO IF 524, 1ST SW 526, OB MAP DB 515 517 116

**1ST LOC CRCT 520** — 1ST LOC IF 532

ON-BOARD MAP DATA MANAGER 115

**NETWORK 104**

1ST DEV TRANS 508

2ND DEV TRANS 510

**2ND DEV 106**

**2ND USER I/F 538** — 2ND DISP I/F 540

**2ND COM CRCT 536** — MAP DATA UPDT 121, 2ND COM IF 550

2ND CONT IF 544

**2ND CNTRL CRCT 534** — MAP ACT MGR 122

**2ND STO CRCT 546** — 2ND SW 542, 2ND STO IF 548, MAP UPDATE 549, CLOUD MAP DB 124

601

```
        ┌─────────┐
        │  START  │
        └─────────┘
             │         602
             ▼
┌───────────────────────────┐
│      INITIATE MAP         │
│      UPDATE        604    │
└───────────────────────────┘
             │
             ▼
┌───────────────────────────┐
│   DETERMINE INDEX SIZE    │
│                    606    │
└───────────────────────────┘
             │
             ▼
┌───────────────────────────┐
│   SELECT UPDATE ENGINE    │
│                    608    │
└───────────────────────────┘
             │
             ▼
┌───────────────────────────┐
│ INTEGRATE INDEX INTO MAP DATABASE │
│                    610    │
└───────────────────────────┘
             │
             ▼
┌───────────────────────────┐
│ PERFORM MAP UPDATE INTEGRATION │
│      CHECKS        612    │
└───────────────────────────┘
             │
             ▼
┌───────────────────────────┐
│ COPY UPDATE TO THE ON-BOARD MAP │
│      DATABASE      614    │
└───────────────────────────┘
             │
             ▼
        ┌─────────┐    616
        │   END   │
        └─────────┘
```

FIG. 6

700

```
┌─────────────────────────────────┐
│      TRANS MAP UPDATE REQ       │
│              702                 │
└─────────────────────────────────┘
                 │
                 ▼
┌─────────────────────────────────┐
│     RECEIVING AN INDEX DELTA    │
│              704                 │
└─────────────────────────────────┘
                 │
                 ▼
┌─────────────────────────────────┐
│       ACCESSING INDEX DELTA     │
│              706                 │
└─────────────────────────────────┘
                 │
                 ▼
┌─────────────────────────────────┐
│   INTEGRATE INDEX DELTA TO MAP  │
│            DATABASE             │
│              708                 │
└─────────────────────────────────┘
                 │
                 ▼
┌─────────────────────────────────┐
│   PERFORMING INTEGRATION CHECKS │
│              710                 │
└─────────────────────────────────┘
                 │
                 ▼
┌─────────────────────────────────┐
│       PARSING THE MAP UPDATE    │
│              712                 │
└─────────────────────────────────┘
                 │
                 ▼
┌─────────────────────────────────┐
│   ENABLING AN ON-BOARD MAP      │
│            DATABASE             │
│              714                 │
└─────────────────────────────────┘
```

FIG. 7

Europäisches
Patentamt

European
Patent Office

Office européen
des brevets

# EUROPEAN SEARCH REPORT

Application Number

EP 22 20 3005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/017108 A1 (NAKAMURA NORIHIRO [JP] ET AL) 21 January 2010 (2010-01-21) | 1,2, 5-10,13, 14 | INV. G01C21/00 G06F16/29 |
| A | * paragraphs [0030] – [0033], [0045], [0048], [0055], [0065] – [0088]; figures 1,3,4 * | 3,4,11, 12 | |
| X | EP 2 626 668 A1 (HERE GLOBAL BV [NL]) 14 August 2013 (2013-08-14) | 1,2,5-7, 9,10,13, 14 | |
| A | * paragraphs [0022] – [0026], [0036] – [0041]; figure 1A * | 3,4,11, 12 | |
| X | US 2013/006925 A1 (SAWAI KIMIYOSHI [JP] ET AL) 3 January 2013 (2013-01-03) * paragraphs [0009], [0012] – [0019] * * paragraphs [0055] – [0059], [0070], [0074] – [0078], [0096], [0105], [0106], [0117] – [0140]; figure 1 * | 1-4, 6-12,14 | |
| X | US 2006/190507 A1 (SEKINE MINORU [JP] ET AL) 24 August 2006 (2006-08-24) | 1-3,9-11 | TECHNICAL FIELDS SEARCHED (IPC) |
| A | * paragraphs [0015], [0032], [0033], [0072] – [0078], [0094] – [0096]; figures 4-7,8,12 * | 4-8, 12-14 | G01C G06F |

The present search report has been drawn up for all claims

| Place of search | Date of completion of the search | Examiner |
|---|---|---|
| The Hague | 20 March 2023 | Bruinsma, Maarten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 22 20 3005

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2023

| Patent document cited in search report | | Publication date | Patent family member(s) | | Publication date |
|---|---|---|---|---|---|
| US 2010017108 | A1 | 21-01-2010 | CA | 2645219 A1 | 17-01-2008 |
| | | | CN | 104819725 A | 05-08-2015 |
| | | | EP | 2038611 A1 | 25-03-2009 |
| | | | KR | 20080104278 A | 02-12-2008 |
| | | | US | 2010017108 A1 | 21-01-2010 |
| | | | WO | 2008007794 A1 | 17-01-2008 |
| EP 2626668 | A1 | 14-08-2013 | NONE | | |
| US 2013006925 | A1 | 03-01-2013 | CN | 102803900 A | 28-11-2012 |
| | | | EP | 2534446 A1 | 19-12-2012 |
| | | | JP | 5511060 B2 | 04-06-2014 |
| | | | JP | 2011197560 A | 06-10-2011 |
| | | | US | 2013006925 A1 | 03-01-2013 |
| | | | WO | 2011118422 A1 | 29-09-2011 |
| US 2006190507 | A1 | 24-08-2006 | EP | 1691168 A1 | 16-08-2006 |
| | | | JP | 5052002 B2 | 17-10-2012 |
| | | | JP | 2006251768 A | 21-09-2006 |
| | | | US | 2006190507 A1 | 24-08-2006 |

EPO FORM P0459

For more details about this annex : see Official Journal of the European Patent Office, No. 12/82